# EUROPEAN PATENT APPLICATION

(11) **EP 1 151 786 A1**
(43) Date of publication of application: **07.11.2001**
(21) Application number: 00900349.2
(22) Date of filing: 12.01.2000
(51) Int. Cl.: B01F 3/04, B01F 5/02

(54) **GAS-LIQUID MIXING DEVICE**

(30) Priority: 14.01.1999 JP 825099
(71) Applicant: Imako, Kenichi, Fujisawa-shi, Kanagawa 251-0042 (JP)
(72) Inventor: Imako, Kenichi, Fujisawa-shi, Kanagawa 251-0042 (JP)
(74) Representative: Dr. Elisabeth Jung Dr. Jürgen Schirdewahn Dipl.-Ing. Claus Gernhardt
(86) International application number: JP0000108
(87) International publication number: WO0041801

(57) **Abstract**

An object is to solve such problems in that when rotating vanes arranged at the bottom of a waste water tank are rotated by a motor installed on a frame over the liquid surface of the waste water tank, a transmission shaft becomes so long that vibration is generated, each part of the device is damaged, its life is shortened, and so forth; and to generate finer air bubbles by the rotating vanes so as to increase the solubility of oxygen. The rotating shaft is arranged in a water tank parallel to a flow direction of the water tube. The base ends of the rotating vanes are fixed to the periphery of the rotating shaft. One end opening part of an air pipe faces an upstream side near the base ends of the rotating vanes, and the other end opening part is arranged in the atmosphere outside of the water tube.

## Description

### Technical Field

The present invention relates to a gas-liquid mixing device for purifying water of a fish farm, water of a water tank for transporting and breeding live fish, water of a swimming pool, or water of a waste water treatment plant and so forth; or, for mixing oxygen and liquid manure into rice growing water or hydroponics water; and furthermore, for mixing carbon dioxide into alkali waste water from a tunnel or subway construction site in order to neutralize the alkali waste water. Moreover, the present invention relates to a gas-liquid mixing device for generating air bubbles of the air taken from the atmosphere and mixing them into various types of water.

### Background Art

In a conventional gas-liquid mixing device, a motor is mounted on a frame provided over a water surface of a water tank or the like. To the shaft of the motor, the top end of a vertical hollow shaft is connected over the water surface. An air inlet is formed at the top end of the hollow shaft, and a plurality of plane vanes are provided radially at the periphery of the bottom end of the hollow shaft under the water surface. An air outlet is formed at the hollow shaft near a mounting part of the plane vanes. The air outlet and the air inlet are linked to each other through an air duct inside the hollow shaft.

When the hollow shaft is rotated by the motor over the water surface, the plane vanes rotate under the water surface with the hollow shaft as a center, and then water in this region is also rotated and flows in the radial direction. Thus, as water pressure near the hollow shaft decreases, the air is sucked from the air outlet of the hollow shaft formed nearby, and is mixed as air bubbles along with the flow of water.

Many air bubbles mixed into the water rise in the water inside the water tank with its buoyancy, during this, the air bubbles come in contact with the water, and oxygen in the air bubbles is dissolved in the water. Thus, as a water depth from the rotating vanes to the water surface becomes deeper, a distance for generated air bubbles to float becomes longer, and the amount of oxygen dissolved in water increases.

Therefore, it is preferable to set a distance between the rotating vanes and the motor over the water surface as long as possible. However, if the length increases, a rotating shaft for joining the motor installed over the water surface to the rotating vanes would also become long. Thus, there is a risk of causing trouble such as vibration during rotation, so there is a limitation on the length itself naturally.

An object of the invention is to transmit the rotation of a motor to rotating vanes without causing any problems such as vibrations, and without being affected by the distance from a water surface of a waste water tank to the rotating vanes, i.e., a water depth, and to provide a long period of use.

Another object is to make the diameters of air bubbles mixed into water finer and to enlarge a contact area between the air bubbles and water, thereby increasing the amount of oxygen in the air dissolved in water.

### Disclosure of Invention

In a gas-liquid mixing device of the present invention, a rotating shaft is provided inside a hollow water tube, the rotating shaft being parallel to the flow direction thereof. Base end parts of rotating vanes are fixed to the periphery of the rotating shaft. One end opening part of an air pipe faces near an upstream side of the base end parts of the rotating vanes, and the other end opening is arranged in the atmosphere outside the water tube. The gas-liquid mixing device mixes air and liquid by sucking the air in the atmosphere into a negative pressure region of liquid generated near the base end parts of the rotating vanes when the rotating vanes are rotated by the liquid inside the water tube.

### Brief Description of Drawings

FIG. 1 is a perspective view, showing a cut portion of a gas-liquid mixing device of an embodiment of the present invention.
FIG. 2 is a perspective view, showing a cut portion of a gas-liquid mixing device of another embodiment of the present invention.
FIG. 3 is a side view, showing a use of the gas-liquid mixing device of the present invention.
FIG. 4 is a side view, showing another use of the gas-liquid mixing device of the present invention.
FIG. 5 is a side view, showing a partially alternative use of FIG. 4.
FIG. 6 is a side view, showing another use of the gas-liquid mixing device of the present invention.
FIG. 7 is a side view, showing that the gas-liquid mixing device of FIG. 6 is provided at a different location.
FIG. 8 is a side view, showing a partially alternative use of FIG. 7.
FIG. 9 is an enlarged perspective view of a portion of FIGs. 1 to 8.
FIG. 10 is a side view, showing another use of the gas-liquid mixing device of the present invention.
FIG. 11 is a side view, showing a use that is different from that of the gas-liquid mixing device of FIG. 1.

### Best Mode for Carrying Out the Invention

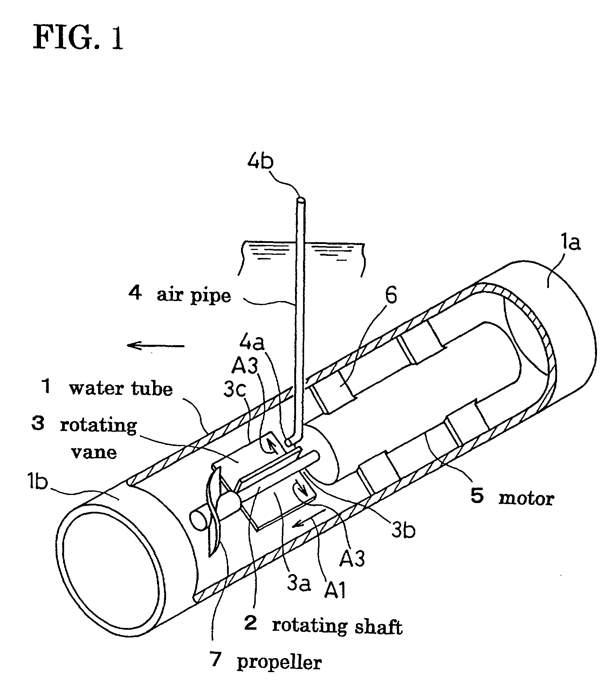

As shown in FIG. 1, a rotating shaft 2 is provided inside a water tube 1 which is formed of a metal or a synthetic resin or the like, the rotating shaft 2 being parallel to the flow direction A1 thereof. Base ends 3a of rotating vanes 3 are fixed to the circumference of the rotating shaft 2. One end opening part 4a of an air pipe 4 is facing an upstream side 3b near the base ends 3a of the rotating vanes 3, and the other end opening part 4b of the air pipe 4 is arranged in the atmosphere outside the water tube 1.

A motor 5 is directly connected to the rotating shaft 2 of the rotating vanes 3, and is fixed with brackets 6 inside the water tube 1. The motor 5 rotates the rotating vanes 3, rotating liquid inside the water tube 1. Under these circumstances, the liquid flows from the base ends 3a toward tip ends 3c of the rotating vanes 3, generating a flow A3 by centrifugal force. The liquid around the tip ends 3c is pressurized with positive pressure, and the liquid near the base ends 3a and the upstream side 3b thereof is at negative pressure.

In this case, air pressures become different between the one end opening part 4a of the air pipe 4 which is disposed at the negative pressure quantity of liquid at the upstream side 3b near the base ends 3a, and the other end opening part 4b which is disposed in the atmosphere. The air in the atmosphere is sucked as air bubbles into the liquid at the upstream side 3b, and flows from the axial part of the water tube 1 toward a tube wall of the water tube 1 due to the flow A3 by centrifugal force as described above. At this time, the sucked air bubbles are made extremely fine in the liquid by the rotation of the rotating vanes 3 and the flow A3, thereby increasing a contact area with the liquid.

Accordingly, oxygen in the atmosphere sucked from the air pipe 4 is efficiently dissolved in the liquid. In this state, water inside the water tube 1 flows from the upstream side 1a toward downstream side 1b thereof in an arrow A1 direction by the rotation of a propeller 7 fixed to the free end of the rotating shaft 2.

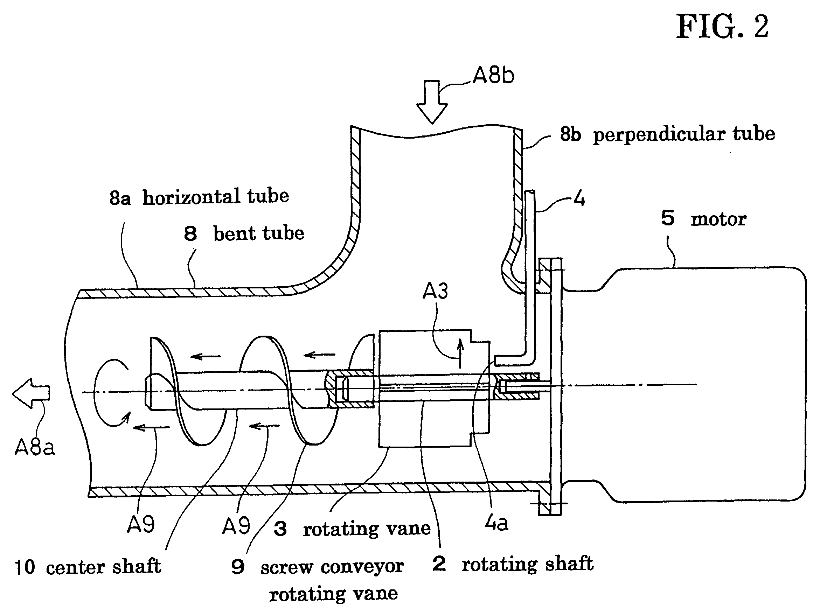

In the gas-liquid mixing device of the present invention shown in FIG. 2, the rotating shaft 2 is provided inside a horizontal tube 8a along its axial line in a bent tube 8, the bent tube 8 having open ends and being comprised of the horizontal tube 8a and a perpendicular tube 8b. Plate rotating vanes 3 are fixed to the periphery of the rotating shaft 2. A base end of a center shaft 10 of a screw conveyor rotating vane 9 is fixed to one end of the rotating shaft 2, and the other end of the rotating shaft 2 is also projected toward the outside of the bent tube 8. The motor 5 is joined to the projected other end.

When the plate rotating vanes 3 and the screw conveyor rotating vane 9 are rotated by the motor 5 with filled liquid in the bent tube 8, the liquid flows from the inlet of the perpendicular tube 8b toward the outlet of the horizontal tube 8a in the direction of an arrow A8b to A8a by the pumping operation of the rotating vane 9.

At this time, due to the rotation of the plate rotating vanes 3, liquid at this section also starts rotating. A flow is generated in the direction of an arrow A3 by centrifugal force, and liquid around the rotating shaft becomes low in pressure. Thus, the air is sucked from the outlet 4a of the air pipe 4 facing the upstream side around the base end of the plate rotating vanes 3. The air is mixed as air bubbles into rotating liquid, and flows in the direction of an arrow A9 by the rotation of the screw conveyer rotating vane 9. At this time, the air bubbles are further subdivided into many minute air bubbles, and are mixed into the liquid. A contact area between the liquid and the air bubbles increases, and oxidation is activated.

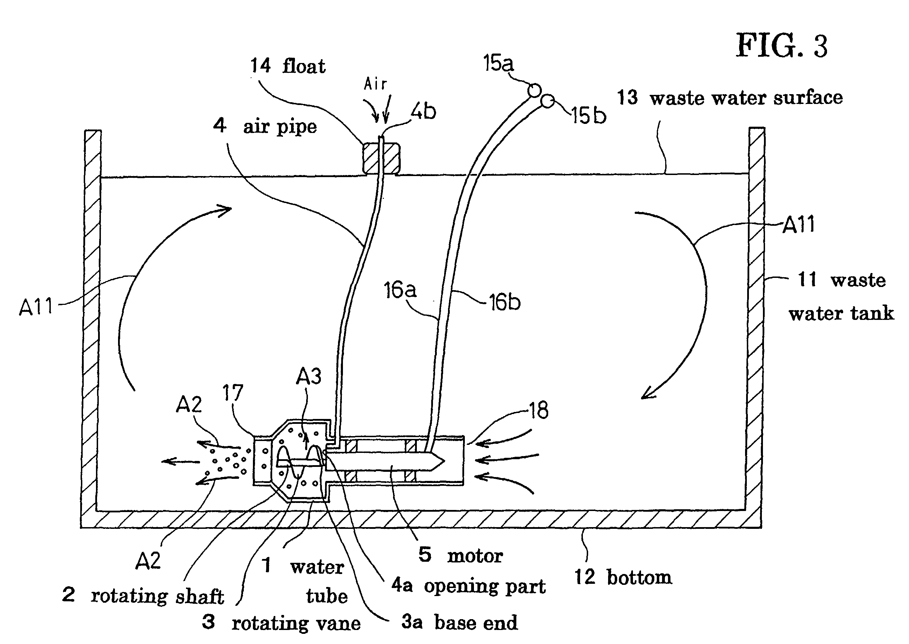

A gas-liquid mixing device shown in FIG. 3 is a gas-liquid mixing device in which the rotating shaft 2 is concentrically provided inside a short cylindrical water tube 1. The base end 3a of a spiral rotating vane 3 is fixed to the periphery of the rotating shaft 2. One end opening part 4a of the air pipe 4 faces an upstream side near the base end 3a of the rotating vane 3. The other end opening part 4b is arranged in the atmosphere outside the water tube 1. The gas-liquid mixing device is arranged on the bottom 12 inside a waste water tank 11.

The opening part 4b of the air pipe 4 is fixed to a float 14 floating on a waste water surface 13, and the motor 5 is connected to power supply terminals 15a, 15b arranged in the atmosphere over the waste water surface 13 through lead wires 16a, 16b.

When the motor 5 rotates, the spiral rotating vane 3 rotates, rotating the waste water at this section. The waste water flows in the radial direction A3 due to centrifugal force, and the axial part of the water tube 1 becomes negative in pressure. The air is sucked from the atmosphere through the opening parts 4b and 4a of the air pipe 4.

The liquid with sucked oxygen in the atmosphere flows in the radial direction A3 by the spiral rotating vane 3, and is also subdivided by the rotation of the rotating vane 3 and flows in the rotating axial direction A2.

The waste water containing many minute air bubbles is released from a discharge port 17 of the gas-liquid mixing device in the arrow A2 direction, and flows in the arrow A11 direction inside the waste water tank 11 and reenters a water inlet 18. At this time, the waste water comes in contact with many minute air bubbles. Oxygen in the air bubbles is abundantly dissolved, and the waste water in the waste water tank 11 is purified.

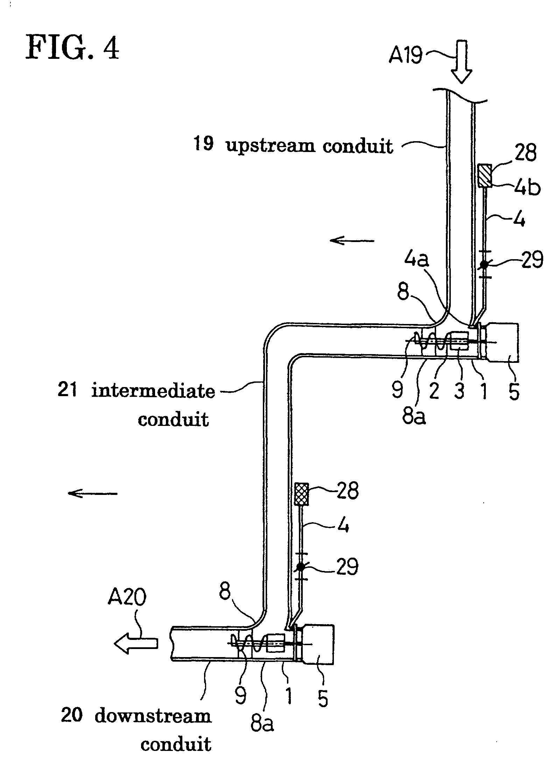

In case of the gas-liquid mixing device shown in FIG. 4, an upstream conduit 19 and a downstream conduit 20 are linked to each other through two bent tubes 8, 8 connected to both ends of an intermediate conduit 21. The gas-liquid mixing devices shown in FIG. 2 are arranged at a horizontal part 8a of each bent tube 8.

The gas-liquid mixing device can suck the air in the atmosphere from the opening parts 4b, 4b of the air pipes 4, 4 through air filters 28, 28 and the opening parts 4a, 4a into the liquid which flows from the arrow A19 to A20 direction inside the bent tubes 8, 8, provided between the upstream conduit 19 and the downstream conduit 20. Thus, with this gas-liquid mixing device, it is unnecessary to provide a casing for the gas-liquid mixing device between the upstream conduit 19 and the downstream conduit 20. Reference numeral 29 indicates a check valve. Therefore, the device is very convenient in installing various types of chemical plants and so forth in a predetermined space.

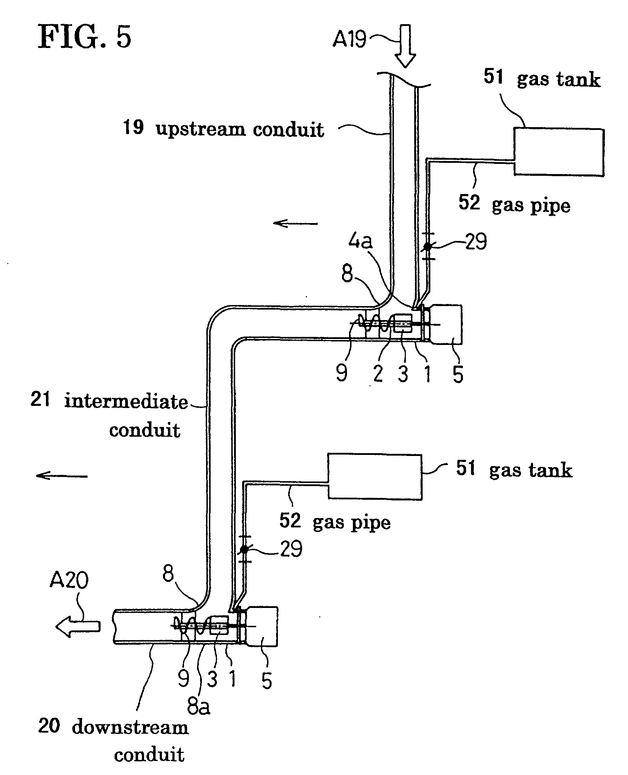

For the gas-liquid mixing device shown in FIG. 5, the air filters 28, 28 that are provided at the opening parts 4b, 4b of the air pipes 4, 4 shown in FIG. 4, are removed, and gas pipes 52, 52 of carbon dioxide gas tanks 51, 51 are linked thereto. From the top end of the upstream conduit 19, alkali waste water from a tunnel or subway construction works and so forth is introduced as shown in the arrow A19. Into the waste water in the bent tubes 8, 8, carbon dioxide from the gas tanks 51, 51 is mixed as air bubbles, thereby neutralizing the alkali waste water.

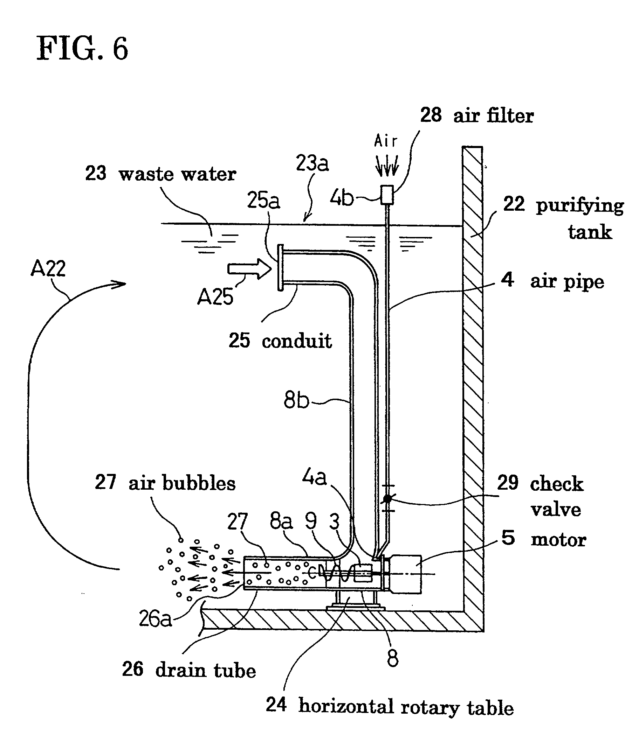

The gas-liquid mixing device shown in FIG. 6 is to purify waste water 23 inside a purifying tank 22 of various types of waste water, and the gas-liquid mixing device shown in FIG. 2 is installed on a horizontal rotary table 24 on the bottom inside the purifying tank 22.

When the motor 5 rotates in the gas-liquid mixing device, the waste water 23 in the purifying tank 22 flows from an inlet 25a of a conduit 25 that is linked to the upstream side of the perpendicular tube 8b, in the arrow A25 direction by the rotation of the screw conveyer rotating vane 9. The waste water then flows toward an outlet 26a of a drain tube 26 linked to the downstream side of the horizontal tube 8a. In this case, the air in the atmosphere is sucked into flowing water through the opening parts 4b and 4a of the air pipe 4 as described above.

The sucked air is minutely subdivided in flowing water by the rotating vanes 3 and the screw conveyer rotating vane 9, and flows as many air bubbles 27 and is also discharged from the outlet 26a of the drain tube 26 into the waste water 23. The air flows in the arrow A22 direction in the purifying tank 22, and enters the inlet 25a of the conduit 25.

Many air bubbles 27 that were made fine during this process, contact the waste water 23 at the peripheral contact surface thereof, and are dissolved in the waste water, thereby purifying it.

Due to the rotation of the horizontal rotary table 24, many air bubbles 27 are also released from the outlet 26a of the drain tube 26 over a wide range, thereby evenly purifying the water inside the purifying tank 22.

The air filter 28 is provided at the opening part 4b at the top end of the air pipe 4, and is arranged in the atmosphere over the waste water surface 23a. The check valve 29 is also provided at a lower part of the air pipe 4 in order to prevent the waste water 23 from entering the opening part 4a of the air pipe 4 together with waste and blocking up the air pipe 4 when the motor 5 stops rotating.

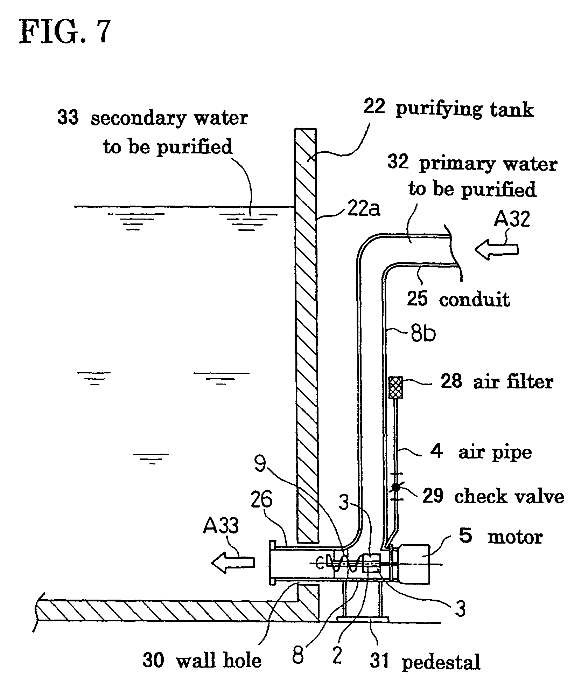

The gas-liquid purifying device shown in FIG. 7 is provided outside the purifying tank 22, instead of being provided inside the waste water 23 of the purifying tank 22 as in the device shown in FIG. 6.

In other words, a wall hole 30 is formed at a lower part of a side wall 22a of the purifying tank 22. The drain tube 26 of the gas-liquid mixing device shown in FIG. 6 is inserted water-tightly from the outside toward the inside of the purifying tank 22. At the same time, a part of the bent tube 8 is installed on a pedestal 31. Primary water to be purified 32 is supplied from the conduit 25 in the arrow A32 direction through the perpendicular tube 8b, flowing by the rotating vanes 3 and 9. The water is discharged from the drain tube 26 toward the bottom of secondary water to be purified 33 inside the purifying tank 22 in the arrow A33 direction.

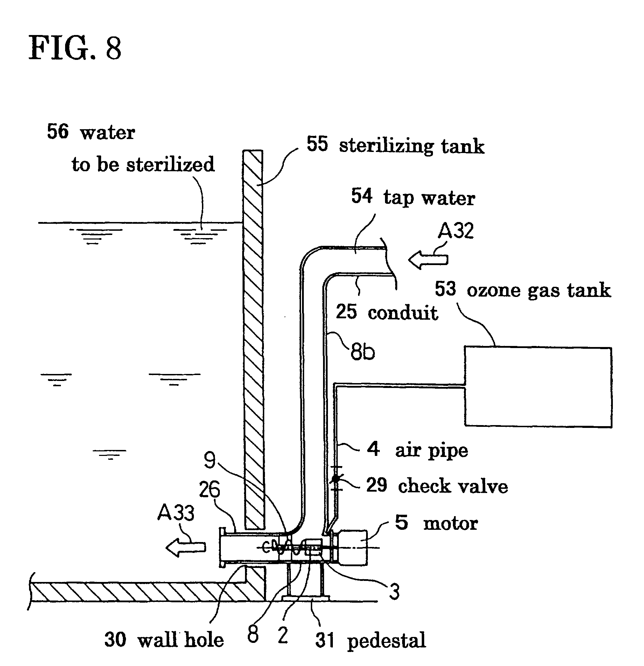

For the gas-liquid mixing device shown in FIG. 8, the air filter 28 at the top end of the air pipe 4 shown in FIG. 7 is removed, and an ozone gas generator or an ozone tank 53 is linked thereto. Tap water 54 is supplied from the conduit 25 in the arrow A32 direction. Ozone gas is supplied in bubbles from the ozone tank 53 into the tap water 54 at the bent tube 8, and the ozone water is supplied from the drain tube 26 into water to be sterilized 56 inside a sterilizing tank 55 in the arrow A 33 direction.

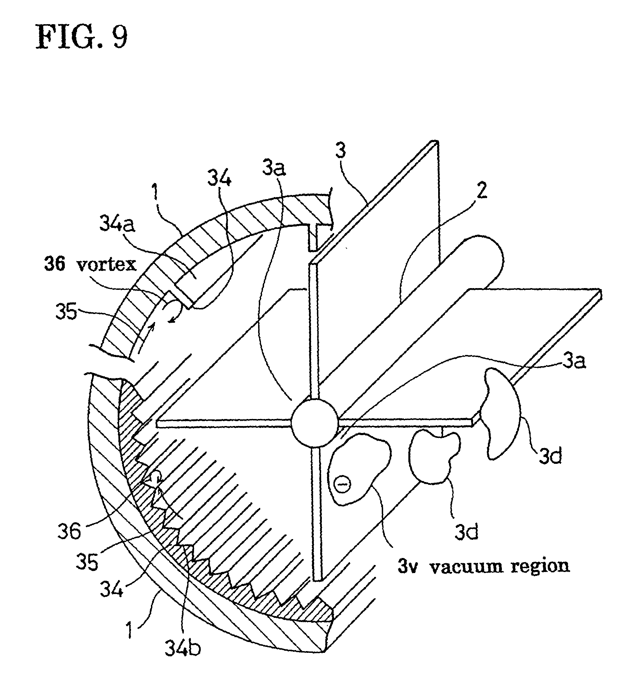

FIG. 9 shows the shape of an inner wall of respective water tube 1 and horizontal tube 8a, and the arrangement of the rotating vane 3 inside the inner wall in the gas-liquid mixing device shown in FIGs. 1 to 8. On the inner wall of the water tube 1, a plurality of protrusions 34, whose longitudinal cross-section is either rectangular 34a or triangular 34b, are provided toward the axial center so that the rotation of liquid 35 that rotates along with the rotation of the rotating vanes 3 is obstructed, and vortexes 36 are generated there so that air bubbles 3d sucked to a vacuum region 3v generated at a base end part 3a of a rotating vane 3 are made finer.

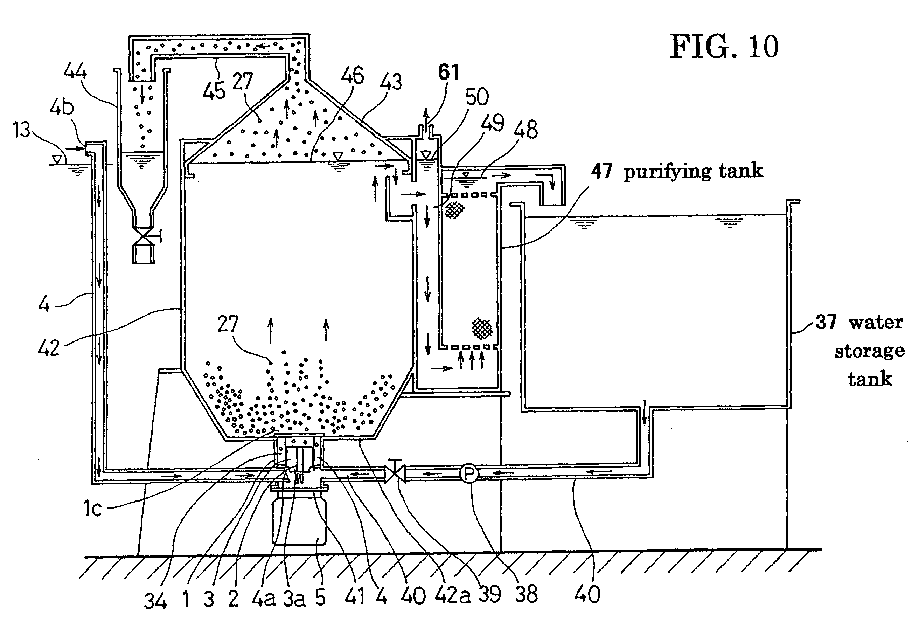

For the gas-liquid mixing device shown in FIG. 10, a vertical rotating shaft 2 is provided inside a vertical water tube 1, the vertical rotating shaft 2 being parallel to the direction of water flowing through the water tube 1. To the periphery of the rotating shaft 2, a plurality of plate-shaped rotating vanes 3 are fixed. One end opening part 4a of the air pipe 4 faces an upstream side near the base end parts 3a of the rotating vanes 3. The other end opening 4b is disposed in the air over the waste water surface 13 outside the water tube 1. A pump 38 and a water supply pipe 40 into which a valve 39 is inserted, link near the base end parts 3a of the rotating vanes 3 to the bottom of a water storage tank 37.

The motor 5 is provided at the bottom of a bottom plate 41 of the water tube 1, and is connected to the bottom end of the rotating shaft 2. A top end opening part 1c of the water tube 1 is linked to a bottom surface 42a of a foaming tank 42. Protrusions 34 in a plate form 34a are also provided on an inner wall surface of the water tube 1 toward the shaft and along the axial center of the shaft.

To the top of the foaming tank 42, a conical foam collecting lid 43 is joined. The foam collecting lid 43 and a fine foam separator 44 are linked through a connecting tube 45. Air bubbles 27 rising from a liquid surface 46 of the foaming tank 42 are separated into liquid and air at the foam separator 44. The liquid is stored at the bottom of the foam separator 44, and the air is released into the atmosphere.

The liquid overflowing from the liquid surface 46 of the foaming tank 42 flows towards the bottom of the purifying tank 47 through a connecting path 49. The air rising from a liquid surface 50 of the connecting path is released into the atmosphere through an air hole 61. The overflow from a purified liquid surface 48 of a purifying tank 47 is stored in the water storage tank 37 mentioned above.

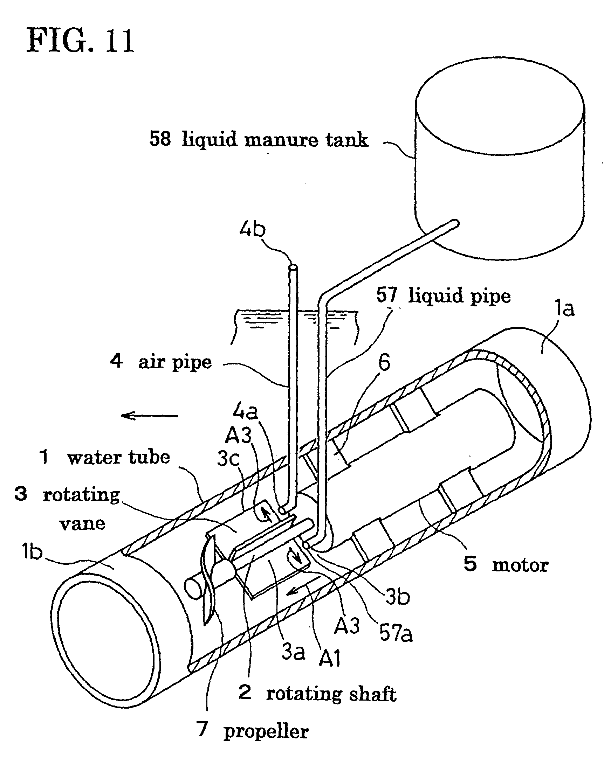

For the gas-liquid mixing device shown in FIG. 11, the air pipe 4 is provided along with a liquid pipe 57 in the gas-liquid mixing device shown in FIG. 1. An opening part 57a of the liquid pipe 57 is arranged adjacent to the opening part 4a of the air pipe 4. A base end of the liquid pipe 57 is linked to a liquid manure tank 58, and the liquid manure therein is mixed into flowing water inside the water tube 1. Thus, air supplied through the air pipe 4 and liquid manure supplied through the liquid pipe 57 are mixed together as hydroponics water, and the water is discharged from a downstream side 1b of the water tube 1.

As described above, the present invention can transmit the rotation of a motor to rotating vanes without any problems such as vibration and so forth even when water is deep between a water surface of a waste water tank and the rotating vanes, and can provide a long-period of use.

Moreover, in the present invention, because a plurality of protrusions are provided to an inner wall of a water tube, the protrusions being parallel to a flow direction inside the water tube, the diameters of air bubbles mixed into waste water can be made smaller by the rotation of rotating vanes. Therefore, a contact area between the air bubbles and water is increased, and therefore, the amount of oxygen dissolved in water is increased and the purifying action is improved.

### Industrial Applicability

As described above, even when water is deep from a water surface to rotating vanes, the rotation of a motor can be transmitted to rotating vanes without vibration. Thus, the device can be arranged at the bottom of the water of a fish farm for expensive fish such as sea bream and flatfish.

In case of supplying oxygen into a water tank for transporting live fish from a fish farm to a retail location, the gas-liquid mixing device of the present invention can be installed in the water of the fish farm or inside a transporting water tank, thereby such function is easily obtained

Furthermore, the gas-liquid mixing device of the present invention can be used to purify water of a swimming pool or water of a waste water treatment plant; or to supply oxygen to water during rice-paddy growing or hydroponics; and to supply carbon dioxide to waste water or the like that inevitably flowing out from a construction site such as a tunnel.

## Claims

1. A gas-liquid mixing device comprising:
a rotating shaft provided in a water tube, the rotating shaft being parallel to a flow direction of the water tube;
rotating vanes whose base end parts are fixed to a periphery of the rotating shaft; and
an air pipe whose one end opening part faces an upstream side near the base end parts of the rotating vanes and the other end opening part is arranged in the atmosphere outside the water tube.

2. A gas-liquid mixing device comprising:
a rotating shaft provided in a straight tube having open ends, the rotating shaft being parallel to a flow direction in the straight tube;
rotating vanes whose base end parts are fixed to a periphery of the rotating shaft; and
an air pipe whose one end opening part faces an upstream side near the base end parts of the rotating vanes and the other end opening part is arranged in the atmosphere outside the water tube.

3. A gas-liquid mixing device comprising:
a rotating shaft provided in one of straight tube portions in a bent tube having open ends, the rotating shaft being parallel to a flow direction of the straight tube;
rotating vanes whose base end parts are fixed to a periphery of the rotating shaft; and
an air pipe whose one end opening part faces an upstream side near the base end parts of the rotating vanes and the other end opening part is arranged in the atmosphere outside the bent tube.

4. The gas-liquid mixing device according to one of Claims 1 to 3, wherein planes of the rotating vanes provided at the periphery of the rotating shaft are parallel to an axial direction of the rotating shaft.

5. The gas-liquid mixing device according to one of Claims 1 to 3, wherein planes of the rotating vanes provided at the periphery of the rotating shaft are inclined relative to an axial direction of the rotating shaft.

6. The gas-liquid mixing device according to one of Claims 1 to 3 and Claim 5, wherein planes of the rotating vanes provided at the periphery of the rotating shaft are formed of spiral curved surfaces.

7. The gas-liquid mixing device according to one of Claims 1 to 3, wherein planes of the rotating vanes provided at the periphery of the rotating shaft are comprised of planes parallel to an axial direction of the rotating shaft and also inclined planes.

8. The gas-liquid mixing device according to Claim 1, wherein the water tube having open ends is arranged parallel to a flow of circulating water inside a water tank.

9. The gas-liquid mixing device according to Claim 3, wherein the bent tube having open ends is arranged inside a water tank.

10. The gas-liquid mixing device according to Claim 3, wherein the bent tube having open ends is arranged outside a water tank.

11. The gas-liquid mixing device according to one of Claims 1 to 10, wherein an output axis of a motor is joined to one end of the rotating shaft on which the base ends of the rotating vanes are mounted, and the motor is provided inside the water tube.

12. The gas-liquid mixing device according to Claim 11, wherein the motor joined to one end of the rotating shaft is provided in a straight tube having open ends.

13. The gas-liquid mixing device according to Claim 11, wherein the motor joined to one end of the rotating shaft is provided outside a bent tube having open ends.

14. The gas-liquid mixing device according to Claim 1, wherein a plurality of protrusions are provided on an inner wall surface of the water tube having open ends, the protrusions being parallel to a flow direction in the water tube.

15. The gas-liquid mixing device according to Claim 1 further comprising:
a foaming tank, wherein an outlet of the water tube is arranged to link to the bottom of the foaming tank;
a water storage tank, wherein an inlet of the water tube is arranged to link to the water storage tank;
a foam collecting lid provided at a ceiling part of the foaming tank; and
a purifying tank, wherein a top of the foaming tank is linked to the water storage tank through the purifying tank.

16. The gas-liquid mixing device according to Claim 1 or 2, wherein one end opening part of a liquid pipe faces an upstream side near base ends of rotating vanes, and the other end opening part thereof is linked to a liquid tank outside of the water tube.

17. A gas-liquid mixing device comprising:
a rotating shaft provided in one of straight tube portions in a bent tube having open ends, the rotating shaft being parallel to a flow direction of the straight tube;
rotating vanes whose base ends are mounted on a periphery of the rotating shaft; and
a gas pipe whose one end opening part faces an upstream side near the base end parts of the rotating vanes and the other end opening part thereof is linked to a gas tank outside of the bent tube.
